# EUROPEAN PATENT SPECIFICATION

(11) **EP 1 466 874 B1**
(45) Date of publication and mention of the grant of the patent: **05.10.2011**
(21) Application number: 04090131.6
(22) Date of filing: 05.04.2004
(51) Int. Cl.: C03B 37/014, C03C 3/06, C03C 13/04

(54) **Method of manufacturing a fluorine-doped quartz glass article**
Verfahren zur Herstellung eines mit Fluor dotierten Quarzglasgegenstandes
Procédé de fabrication d'un corps en verre de silice dopée au fluor

(30) Priority: 08.04.2003 JP 2003104142; 08.04.2003 JP 2003104150
(43) Date of publication of application: 13.10.2004
(73) Proprietor: Shin-Etsu Chemical Co., Ltd., Chiyoda-ku, Tokyo (JP)
(72) Inventor: Abe, Jun, Annaka-shi Gunma-ken (JP); Mantoku, Nobuyasu, Annaka-shi Gunma-ken (JP)
(74) Representative: Pfenning, Meinig & Partner GbR

(56) References cited:
- EP-A- 1 084 995
- US-A- 5 217 516
- US-A- 5 259 856
- US-B1- 6 474 107
- PATENT ABSTRACTS OF JAPAN vol. 2002, no. 06, 4 June 2002 (2002-06-04) -& JP 2002 047013 A (SUMITOMO ELECTRIC IND LTD), 12 February 2002 (2002-02-12)
- PATENT ABSTRACTS OF JAPAN vol. 011, no. 381 (C-464), 12 December 1987 (1987-12-12) -& JP 62 153130 A (SUMITOMO ELECTRIC IND LTD), 8 July 1987 (1987-07-08)
- PATENT ABSTRACTS OF JAPAN vol. 013, no. 290 (C-614), 5 July 1989 (1989-07-05) -& JP 01 083533 A (FUJIKURA LTD), 29 March 1989 (1989-03-29)
- PATENT ABSTRACTS OF JAPAN vol. 015, no. 177 (C-0829), 7 May 1991 (1991-05-07) -& JP 03 040931 A (SUMITOMO ELECTRIC IND LTD), 21 February 1991 (1991-02-21)

## Description

### BACKGROUND OF THE INVENTION

### Field of the Invention

The present invention relates to a method for manufacturing a fluorine-doped quartz glass article or product suitable for manufacturing an optical fiber for optical communications.

### Description of the Related Art

In order to obtain desired transmission characteristics in manufacturing an optical fiber for optical communications, a clad section of the optical fiber is doped with fluorine to form a porous glass preform, and then the preform is drawn to adjust the refractive index distribution thereof.

In manufacturing a fluorine-doped quartz glass, a method of doping a porous glass preform with fluorine when forming the preform, and another method of doping a porous glass preform with fluorine when heating, sintering and vitrifying the preform are generally used.

For example, in the following Patent Documents 1 to 3, methods of doping a porous glass preform with fluorine uniformly are disclosed.

Patent Document 1 discloses that in order to obtain a fluorine-doped glass article whose refractive index distribution is uniform in the longitudinal direction, a porous glass preform is gradually inserted into a furnace in an atmosphere of a fluoride gas from its end first, and then the speed of moving the preform at a heat zone is gradually lowered.

In addition, to perform fluorine doping uniformly up to the center section of the glass, Patent Document 2 discloses that the bulk density of a porous glass preform is 0.2 to 0.7g/cm³, and the specific surface area is 10 to 50m²/g, and Patent Document 3 discloses that a porous glass preform is doped with fluorine where the bulk density of the peripheral section is higher than that of the center section.

It is considered that the diffusion of the fluorine gas into the porous glass preform is determined by the function of time and temperature. Meanwhile, the bulk density of the porous glass preform affects this greatly, so it is preferable that the bulk density be small in doping the center section of the porous glass preform with fluorine. Also, if the diameter of the porous glass preform is large, it is difficult for fluorine to penetrate up to the center section (cf. Patent Document 2) .

However, even though porous glass preforms formed under the same condition are vitrified under the same partial pressure of a fluorine gas and the same sintering gas conditions, as long as the sintering furnaces are different, there is a problem that the condition of fluorine doping is different regardless of the bulk density or the size of diameter of porous glass preforms.

In addition, Patent Document 4 discloses that an inert gas such as He is held in an atmosphere containing a fluorine compound such as CF₄, SF₆, SiF₄, etc., whereby a porous glass preform is doped with fluorine, and then the preform is sintered and vitrified to form a fluorine-doped quartz glass.

As the fluorine compound used for doping the porous glass preform with fluorine, SiF₄ is generally used. However, if the preform is sintered and vitrified under the atmosphere of a SiF₄ gas, hydroxyl groups are contained in the obtained glass, and thus there is a problem that absorption occurs at 1385 nm wavelength.

In addition, to obtain an anhydrous optical fiber preform, conventionally, hydroxyl groups inside a porous glass preform are forced to react to chloride, and the preform is heat-treated at 800 to 1000°C in an atmosphere of a chloride or SOCl₂ gas and then dehydrated (cf. Patent Document 4).
Patent Document 1: Japanese Patent Application Laid-open No. 2002-47013
Patent Document 2: Japanese Patent Application Laid-open No. 2002-60228
Patent Document 3: Japanese Patent Application Laid-open No. 2002-114522
Patent Document 4: Japanese Patent Application Laid-open No. 1981-73636
JP 03 040 931 A discloses a method of producing a vitrified, fluorine-doped silica glass by sintering a solid shaped, porous perform of 600 mm length moving at a descent rate of 10 mm/min in a heated zone comprising fluorine at around 1200°C using a heater of length 900 mm.

Meanwhile, even in an optical fiber preform manufactured by the method disclosed in Patent Document 4, it is impossible to sufficiently eliminate hydroxyl groups from the glass, and there also occurs absorption at 1385nm in wavelength.

### SUMMARY OF THE INVENTION

Therefore, it is an object of the present invention to provide a method for manufacturing a fluorine-doped quartz glass article, which is capable of overcoming the above drawbacks accompanying the conventional art. The above and other objects can be achieved by combinations described in the independent claims. The dependent claims define further advantageous and exemplary combinations of the present invention.

According to the present invention, a method for manufacturing a fluorine-doped quartz glass article by sintering a porous glass preform moving in a heat zone in an atmosphere of a fluorine gas is provided, wherein a fluorine gas process is performed by setting a moving speed of the porous glass preform in the heat zone heated at 1000°C or more in order that L/V is greater than or equal to 40 minutes and less than or equal to 75 minutes where L is the length (mm) of a heater, and V is the moving speed (mm/min).

The temperature of the heat zone may be vitrification temperature.

The fluorine gas process maybe performed in the heat zone which is at 1000°C or more not to perform a vitrification process, and then the vitrification process is performed by increasing the temperature of the heat zone.

The fluorine gas process may be performed by setting the moving speed of the porous glass preform in the heat zone heated at 1000°C or more in order that L/V₁+L/V₂ is greater than or equal to 40 minutes and less than or equal to 75 minutes, while moving the porous glass preform at a moving speed V₁ in the heat zone which is at 1000°C or more not to perform the vitrification process, and at a moving speed V₂ in the heat zone at vitrification temperature.

The porous glass preform may be solid or hollow.

The porous glass preform may be formed by depositing glass particles on a core rod.

The summary of the invention does not necessarily describe all necessary features of the present invention. The present invention may also be a sub-combination of the features described above. The above and other features and advantages of the present invention will become more apparent from the following description of the embodiments taken in conjunction with the accompanying drawings.

### BRIEF DESCRIPTION OF THE DRAWINGS

Fig.1 shows the refractive index distribution profile of a fluorine-doped quartz glass obtained in Examples 1 to 5 of the present invention.

Fig. 2 shows the refractive index distribution profile of a fluorine-doped quartz glass obtained in Comparative Example 1.

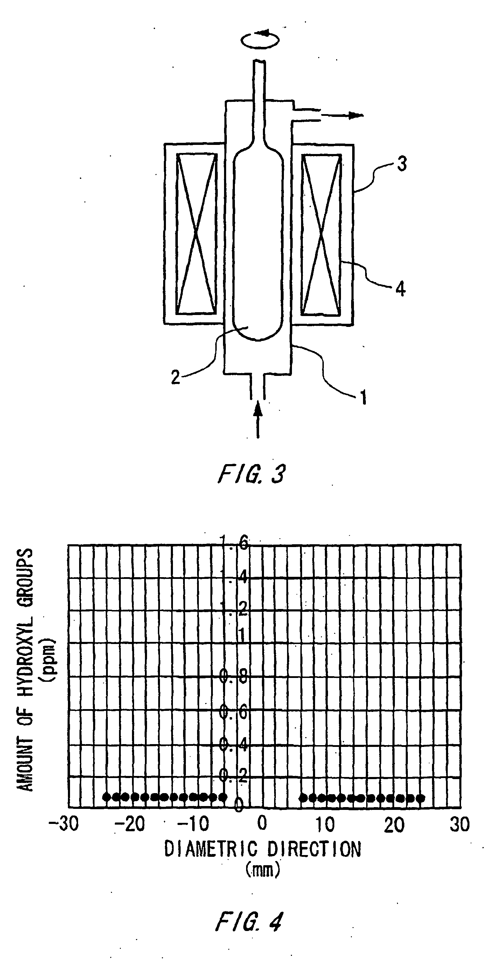

Fig. 3 shows a vertically cross-sectional view of an example of a sintering furnace.

Fig. 4 shows the amount of hydroxyl groups in a fluorine-doped quartz glass obtained in Example 1.

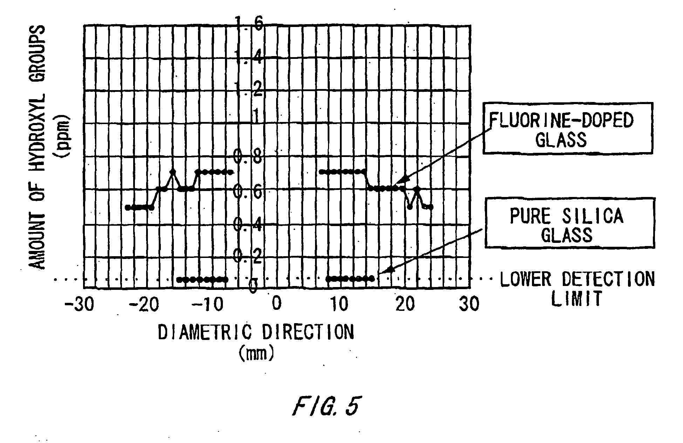

Fig. 5 shows the amount of hydroxyl groups in fluorine-doped quartz glasses obtained in Comparative Examples, 1 and 2.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

When porous glass preforms are vitrified in an atmosphere of a fluorine gas, the refractive index distribution profiles of the fluorine-doped quartz glasses manufactured are different due to the individual difference of sintering furnaces used, and the temperature in a heat zone in the atmosphere of a fluorine gas and the stay time of the porous glass preform in the heat zone are significantly related to each other.

In other words, during the fluorine gas process of the porous glass preform, the moving speed of the porous glass preform is determined in consideration of the length L (mm) of the heater in order that L/V is greater than or equal to 40 minutes and less than or equal to 75 minutes in the heat zone heated at 1000°C or more.

Then, the porous glass preform is doped with fluorine, sintered and vitrified in the following manner.

First, the porous glass preform is moved at a moving speed V₁ in the heat zone which is at 1000°C or more not to perform a vitrification process, and then moved in the heat zone at a moving speed V₂ again at a temperature increased to perform the vitrification process. At this time, the moving speeds V₁ and V₂ are set in order that the total processing time of a fluorine gas defined as L/V₁+L/V₂ is greater than or equal to 40 minutes and less than or equal to 75 minutes.

Hereinafter,theinventionwill now be described based on Examples, which do not intend to limit the scope of the present invention, but exemplify the invention.

First, porous quartz tubes of 100mm in outer diameter, 15mm in inner diameter and 500mm in length were manufactured under the gas supply conditions shown in Table 1 which were provided to Examples 1 to 5 and Comparative Examples 1 and 2.

**[Table 1]**

| Gas | Initial Condition | Normal Condition |
|---|---|---|
| H₂ | 70(l/min) | 90(l/min) |
| O₂ | 40(l/min) | 40(l/min) |
| SiCl₄ | 30(g/min) | 60(g/min) |

### (Example 1)

After the porous quartz materials were dehydrated at 1100°C in the atmosphere of a chloride gas, the temperature of the heater in the heat zone (the length L of the heater = 140mm) is increased up to 1350°C, and a vitrification process was performed at the moving speed V set as 3mm/min in an atmosphere of a fluorine gas of 12mol% in order that the fluorine processing time L/V of the porous quartz materials was 47 minutes.

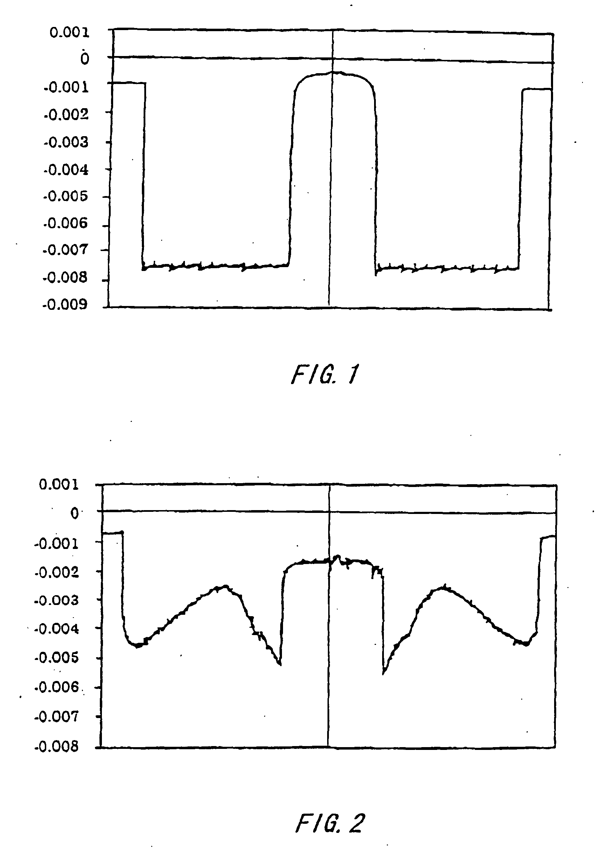

Fig. 1 shows the refractive indexdistributionprofile of the fluorine-doped quartz glass obtained. It is found that fluorine doping was uniformly performed in the diametric direction as shown in Fig. 1. Further, the horizontal axis represents the diameter from the center of the core, and the vertical axis represents the difference in specific refractive index.

### (Example 2)

After the porous quartz materials were dehydrated at 1000°C in the atmosphere of chloride, the fluorine gas process was performed at the moving speed V₁ of 4,5mm/min with the same temperature of 1000°C in the atmosphere of a fluorine gas of 12mol%. Then, the temperature of the heater is increased up to 1350°C with the partial pressure of a fluorine gas being maintained, and a vitrification process was performed at the moving speed V₂ set as 4.5mm/min in an atmosphere of a fluorine gas of 12mol% in order that the total processing time of a fluorine gas (L/V₁+L/V₂] was 62 minutes.

The refractive index distribution profile of the fluorine-doped quartz glass obtained is shown in Fig. 1 in the same way as Example 1.

### (Comparative Example 1)

After the porous quartz materials were dehydrated at 1100°C in the atmosphere of a chloride gas, the temperature of the heater in the heat zone (L = 140mm) is increased up to 1400°C, and a vitrification process was performed at the moving speed V set as 4mm/min in an atmosphere of a fluorine gas of 12mol% in order that the fluorine processing time L/V of the porous quartz materials was 35 minutes.

Fig. 2 shows the refractive index distribution profile of the fluorine-doped quartz glass obtained. It is found that fluorine doping was not uniformly performed in the diametric direction as shown in Fig. 2.

### (Example 3)

After the porous quartz materials were dehydrated at 1100°C in the atmosphere of chloride, the temperature of the heater in the heat zone (L = 140mm) is increased up to 1400°C, and a vitrification process was performed at the moving speed V set as 2mm/min in the atmosphere of a fluorine gas of 12mol% in order that the fluorine processing time L/V of the porous quartz materials was 70 minutes.

The refractive index distribution profile of the fluorine-doped quartz glass obtained shows that fluorine doping was uniformly performed in the diametric direction as shown in Fig. 1.

### (Example 4)

A similar experiment was performed at the same temperature of the heater and moving speed V as those in Comparative Example 1 in the sintering furnace whose length L of the heater is 300mm. The fluorine processing time defined as L/V was 75 minutes.

The refractive index distribution profile of the fluorine-doped quartz glass obtained shows that fluorine doping was performed uniformly in the diametric direction as shown in Fig. 1.

### (Comparative Example 2)

A similar experiment was performed at the same temperature of the heater and moving speed V as those in Comparative Example 1 and Example 4 in a sintering furnace whose length L of the heater is short (L = 60mm) . The fluorine processing time defined as L/V was 15 minutes. In this case, the porous quartz material was not vitrified.

### (Example 5)

A fluorine gas process and a vitrification process were performed at the same temperature at a changed moving speed in the same sintering furnace used in Comparative Example 1, and a fluorine-doped quartz glass was obtained, where fluorine doping was uniformly performed as shown in Fig. 1.

Further, the sintering conditions of Examples 1 to 5 and Comparative Examples 1 and 2 are shown in Table 2. The evaluation criteria are represented as "o" in case fluorine doping was performed entirely and uniformly, "Δ" in case it was difficult to dope the center section with fluorine, and "x" in case none was vitrified, respectively.

**[Table 2]**

| | Dehydration | | Vitrification | | Fluorine Gas Process | | Evaluation |
|---|---|---|---|---|---|---|---|
| | Temp. (°C) | Moving Speed V (mm/min) | Temp. (°C) | Moving Speed V (mm/min) | Length Of Heater L (mm) | L/V (min) | |
| Example 1 | 1100 | 4 | 1350 | 3 | 140 | 47 | o |
| Example 2 | 1000 | 4 | 1350 | 4.5 | 140 | 62 | o |
| Comparative Example 1 | 1100 | 4 | 1400 | 4 | 140 | 35 | Δ |
| Example 3 | 1100 | 4 | 1400 | 2 | 140 | 70 | o |
| Example 4 | 1100 | 4 | 1400 | 4 | 300 | 75 | o |
| Comparative Example 2 | 1100 | 4 | 1400 | 4 | 60 | 15 | × |
| Example 5 | 1100 | 4 | 1400 | 1 | 60 | 60 | o |

## Claims

1. A method for manufacturing a fluorine-doped quartz glass article by sintering a porous glass preform moving in a heat zone in an atmosphere of a fluorine gas, wherein a fluorine gas process is performed by setting a moving speed of said porous glass preform in said heat zone heated at 1000°C or more in order that L/V is greater than or equal to 40 minutes and less than or equal to 75.minutes, where L is length (mm) of a heater, and V is said moving speed (mm/min).

2. A method for manufacturing a fluorine-doped quartz glass article as claimed in claim 1, wherein temperature of said heat zone is vitrification temperature.

3. A method for manufacturing a fluorine-doped quartz glass article as claimed in claim 1, wherein said fluorine gas process is performed in said heat zone which is at 1000°C or more not to perform a vitrification process, and then said vitrificaiton process is performed by increasing said temperature of said heat zone.

4. A method for manufacturing a fluorine-doped quartz glass article as claimed in claim 3, wherein said fluorine gas process is performed by setting said moving speed of said porous glass preform in said heat zone heated at 1000°C or more in order that L/V₁+L/V₂ is greater than or equal to 40 minutes and less than or equal to 75 minutes, while moving said porous glass preform at a moving speed V₁ in said heat zone which is at 1000°C or more not to perform said vitrification process, and at a moving speed V₂ in said heat zone at vitrification temperature.

5. A method for manufacturing a fluorine-doped quartz glass article as claimed in claim 1, wherein said porous glass preform is solid.

6. A method for manufacturing a fluorine-doped quartz glass article as claimed in claim 1, wherein said porous glass preform is hollow.

7. A method for manufacturing a fluorine-doped quartz glass article as claimed in claim 1, wherein said porous glass preform is formed by depositing glass particles on a core rod.

## Patentansprüche

1. Verfahren zum Herstellen eines mit Fluor dotierten Quarzglasgegenstands durch Sintern eines porösen Glasvorformlings, der sich in einer Heizzone in einer Atmosphäre aus einem Fluorgas bewegt, wobei ein Fluorgasprozess durchgeführt wird durch Einstellen einer Bewegungsgeschwindigkeit des porösen Glasvorformlings in der Heizzone, die auf 1000°C oder höher erwärmt ist, derart, dass L/V länger als oder gleich 40 Minuten und kürzer als oder gleich 75 Minuten ist, wobei L die Länge (mm) einer Heizvorrichtung und V die Bewegungsgeschwindigkeit (mm/min) sind.

2. Verfahren zum Herstellen eines mit Fluor dotierten Quarzglasgegenstands nach Anspruch 1, bei dem die Temperatur der Heizzone die Sintertemperatur ist.

3. Verfahren zum Herstellen eines mit Fluor dotierten Quarzglasgegenstands nach Anspruch 1, bei dem der Fluorgasprozess in der Heizzone durchgeführt wird, die bei 1000°C oder mehr ist, wobei ein Sinterprozess nicht durchgeführt wird, und dann der Sinterprozess durch Erhöhen der Temperatur der Heizzone durchgeführt wird.

4. Verfahren zum Herstellen eines mit Fluor dotierten Quarzglasgegenstands nach Anspruch 3, bei dem der Fluorgasprozess durchgeführt wird durch Einstellen der Bewegungsgeschwindigkeit des porösen Glasvorformlings in der auf 1000°C oder mehr erwärmten Heizzone, derart, dass L/V₁+L/V₂ länger als oder gleich 40 Minuten und kürzer als oder gleich 75 Minuten ist, während der poröse Glasvorformling bei einer Bewegungsgeschwindigkeit V₁ in der Heizzone bewegt wird, die bei 1000°C oder mehr ist, wobei der Sinterprozess nicht durchgeführt wird, und bei einer Bewegungsgeschwindigkeit V₂ in der Heizzone bei Sintertemperatur.

5. Verfahren zum Herstellen eines mit Fluor dotierten Quarzglasgegenstands nach Anspruch 1, bei dem der poröse Glasvorformling ein Festkörper ist.

6. Verfahren zum Herstellen eines mit Fluor dotierten Quarzglasgegenstands nach Anspruch 1, bei dem der poröse Glasvorformling hohl ist.

7. Verfahren zum Herstellen eines mit Fluor dotierten Quarzglasgegenstands nach Anspruch 1, bei dem der poröse Glasvorformling durch Aufbringen von Glasteilchen auf einen Kernstab gebildet wird.

## Revendications

1. Procédé de fabrication d'un article en verre de quartz dopé au fluor par pré-fusion d'une préforme en verre poreux se déplaçant dans une zone de coeur dans une atmosphère de fluor gazeux, où un procédé au fluor gazeux est réalisé en définissant une vitesse de déplacement de ladite préforme de verre poreux dans ladite zone thermique chauffée à 1000°C ou plus afin que le rapport L/V soit supérieur à ou égal à 40 minutes et inférieur à ou égal à 75 minutes, où L est la longueur (mm) d'un réchauffeur, et V est ladite vitesse de déplacement (mm/min).

2. Procédé de fabrication d'un article en verre de quartz dopé au fluor selon la revendication 1, où la température de ladite zone thermique est une température de vitrification.

3. Procédé de fabrication d'un article en verre de quartz dopé au fluor selon la revendication 1, où ledit procédé au fluor gazeux est réalisé dans ladite zone thermique qui est à 1000°C ou plus pour ne pas réaliser un procédé de vitrification, et ensuite ledit procédé de vitrification est réalisé en augmentant ladite température de ladite zone thermique.

4. Procédé de fabrication d'un article en verre de quartz dopé au fluor selon la revendication 3, où ledit procédé au fluor gazeux est réalisé en définissant ladite vitesse de déplacement de ladite préforme de verre poreux dans ladite zone thermique chauffée à 1000°C ou plus afin que L/V₁ + L/V₂ soit supérieur à ou égal à 40 minutes et inférieur ou égal à 75 minutes, tout en faisant circuler ladite préforme de verre poreux à une vitesse de déplacement V₁ dans ladite zone thermique qui est à 1000°C ou plus pour ne pas réaliser ledit procédé de vitrification, et à une vitesse de déplacement V₂ dans ladite zone thermique à une température de vitrification.

5. Procédé de fabrication d'un article en verre de quartz dopé au fluor selon la revendication 1, où ladite préforme de verre poreux est solide.

6. Procédé de fabrication d'un article en verre de quartz dopé au fluor selon la revendication 1, où ladite préforme de verre poreux est creuse.

7. Procédé de fabrication d'un article en verre de quartz dopé au fluor selon la revendication 1, où ladite préforme de verre poreux est formée par dépôt de particules de verre sur une tige de coeur.
